# EUROPÄISCHE PATENTSCHRIFT

(11) **EP 2 446 400 B1**
(45) Veröffentlichungstag und Bekanntmachung des Hinweises auf die Patenterteilung: **02.09.2015**
(21) Anmeldenummer: 10721035.3
(22) Anmeldetag: 08.06.2010
(51) Int. Cl.: G06K 19/077, G06K 7/00

(54) **RFID-LESEGERÄT UND RFID-SYSTEM**
RFID-READER AND SYSTEM
LECTEUR ET SYSTEME RFID

(30) Priorität: 23.06.2009 DE 102009027123
(43) Veröffentlichungstag der Anmeldung: 02.05.2012
(73) Patentinhaber: Bundesdruckerei GmbH, 10958 Berlin (DE)
(72) Erfinder: TIETKE, Markus, 12439 Berlin (DE); FRITZE, Frank, 12487 Berlin (DE); FISCHER, Jörg, 13053 Berlin (DE)
(74) Vertreter: Richardt Patentanwälte PartG mbB
(86) Internationale Anmeldenummer: PCT/EP2010/057984
(87) Internationale Veröffentlichungsnummer: WO 2010/149490

(56) Entgegenhaltungen:
- WO-A1-96/03713
- US-A- 6 027 027
- US-B2- 7 333 786

## Beschreibung

Die Erfindung betrifft ein RFID-Lesegerät und ein RFID-System.

Aus dem Stand der Technik sind RFID-Systeme an sich bekannt, bei denen mittels hochfrequenter Funksignale im Radiofrequenz (RF)-Bereich eine Kommunikation erfolgt. Ein solches RFID-System ist beispielsweise aus der WO 2008/145505 A1 bekannt.

Aus WO 96/03713 ist ein Sicherheitszugangsschaltkreis und eine Zugangskarte bekannt. Der Schaltkreis hat Sende- und Empfangswicklungen, die so angeordnet sind, dass sie möglichst entkoppelt sind.

US 7,333,786 B2 zeigt ein Schreiblesegerät mit zwei Antennenwicklungen, die durch ein Metallchassis voneinander getrennt sind, welches eine Apertur aufweist, durch welche hindurch eine Kopplung des magnetischen Flusses erfolgt. Der Abstand zwischen den Antennenspulen ist beliebig wählbar.

Die DE 10 2006 046 640 beschreibt ein RFID-Lesegerät für ein Dokument. Aus der DE 10 2005 055 088 ist eine Vorrichtung zur Kommunikation mit Transpondern über Nahfeld-Antennen bekannt.

Der Erfindung liegt demgegenüber die Aufgabe zugrunde, ein verbessertes RFID-Lesegerät und ein verbessertes RFID-System zu schaffen.

Die der Erfindung zugrunde liegenden Aufgaben werden jeweils mit den Merkmalen der unabhängigen Patentansprüche gelöst. Ausführungsformen der Erfindung sind in den abhängigen Patentansprüchen angegeben.

Nach Ausführungsformen der Erfindung wird ein RFID-Lesegerät mit einer Sendeantenne und einer Empfangsantenne geschaffen, wobei die Sendeantenne von der Empfangsantenne um einen ersten Abstand beabstandet ist, wobei die Sendeantenne Sendeantennenwicklungen aufweist, die in einer ersten Ebene liegen, und wobei die Empfangsantenne Empfangsantennenwicklungen aufweist, die in einer zweiten Ebene liegen, und mit Mitteln zur Positionierung eines RFID-Dokuments an einer Position, die von der Sendeantenne um einen zweiten Abstand beabstandet ist, wobei die Sendeantenne zwischen der Empfangsantenne und der Position angeordnet ist

Unter einem RFID-Dokument wird hier jedes Dokument verstanden, welches eine RFID-Schaltung beinhaltet, wie zum Beispiel einen sogenannten RFID-Chip. Mit Hilfe seiner RFID-Schaltung kann das RFID-Dokument RF-Signale von dem RFID-Lesegerät empfangen und RF-Signale an das RFID-Lesegerät senden.

Für die RF-Übertragung können die RF-Signale einer RF-Trägerwelle aufmoduliert werden, wobei die Trägerwelle eine Frequenz im Megahertzbereich haben kann, wie zum Beispiel von 13,56 MHz.

Unter einem RFID-Dokument wird insbesondere ein Wert- oder Sicherheitsdokument verstanden, wie zum Beispiel ein Ausweisdokument, d.h. ein ID-Dokument, insbesondere ein Personalausweis, Reisepass, Führerschein, Firmenausweis oder ein Zahlungsmittel, wie zum Beispiel eine Banknote, eine Kreditkarte oder ein sonstiger Berechtigungsnachweis, wie zum Beispiel eine Eintrittskarte, ein Frachtbrief, ein Visum oder dergleichen. Das RFID-Dokument hat einen Dokumentenkörper, der papierbasiert und oder kunststoffbasiert sein kann. Insbesondere kann es sich bei dem Dokument um eine Chipkarte handeln.

Unter einem RFID-Lesegerät wird hier jede Vorrichtung verstanden, die mit einem RFID-Dokument RF-Signale austauschen kann, insbesondere um Daten aus einem elektronischen Speicher des RFID-Dokuments auszulesen.

Ausführungsformen der Erfindung sind besonders vorteilhaft, da aufgrund der Positionierung des RFID-Dokuments gegenüber der Sendeantenne, die von dem RFID-Dokument gesendeten RFID-Signale an der Sendeantenne gespiegelt werden, sodass die RFID-Signale von der Empfangsantenne mit einem verbesserten Signal-Rauschleistungs-Verhältnis (Signal to Noise Ratio - SNR) empfangen werden können.

Nach einer Ausführungsform der Erfindung beträgt der zweite Abstand mindestens das 0,7-fache des ersten Abstands. Vorzugsweise beträgt der zweite Abstand mindestens das 0,8-fache des ersten Abstands. Insbesondere können die ersten und zweiten Abstände gleich sein. Es ist auch möglich, dass der zweite Abstand wesentlich größer als der erste Abstand ist, wie zum Beispiel das 2- oder 3-fache des ersten Abstands.

Nach einer Ausführungsform der Erfindung sind die Sendeantennenwicklungen und die Empfangsantennenwicklungen konzentrisch zueinander angeordnet. Beispielsweise können die Sendeantennenwicklungen und/oder die Empfangsantennenwicklungen kreisförmig oder rechteckförmig ausgebildet sein.

Nach einer Ausführungsform der Erfindung sind die ersten und die zweiten Ebenen zueinander parallel. Ferner sind die Mittel zur Positionierung des RFID-Dokuments so ausgebildet, dass eine Dokumentenantennenwicklung des RFID-Dokuments konzentrisch zu den Sendeantennen- und Empfangsantennenwicklungen ist, wenn sich das RFID-Dokument in der Position befindet. Ferner können die Mittel zur Positionierung des RFID-Dokuments so ausgebildet sein, dass eine dritte Ebene, in der die Dokumentenantennenwicklungen liegen, parallel zu den ersten und zweiten Ebenen ist, wenn sich das RFID-Dokument in der Position befindet.

Nach einer Ausführungsform der Erfindung hat das RFID-Lesegerät einen RF-Sender, der mit der Sendeantenne verbunden ist, um ein Feld zu erzeugen, und zwar mit einer Feldstärke, die an der Position mehr als 7,5 A/m beträgt. Der RF-Sender sendet also eine Trägerwelle ab, deren Feldstärke an der Position mehr als 7,5 A/m beträgt. Dieser Trägerwelle kann der RF-Sender ein RF-Signal aufmodulieren, um dieses an das RFID-Dokument zu senden, wenn sich das RFID-Dokument in der Position befindet.

Das RFID-Lesegerät hat ferner Steuerungsmittel, die so ausgebildet sind, dass der RF-Sender in einem Empfangsintervall zur Erzeugung des Feldes mit der Feldstärke von mehr als 7,5 A/m an der Position angesteuert wird, sodass ein RF-Signal, welches das RFID-Dokument an das RFID-Lesegerät sendet, diesem Feld überlagert wird. Das RFID-Lesegerät kann also so ausgebildet sein, dass die Trägerwelle nicht nur in einem Sendeintervall, während dessen ein RF-Signal von dem RFID-Lesegerät an das RFID-Dokument gesendet wird, sondern auch während eines Empfangsintervalls, während dessen ein RF-Signal von dem RFID-Dokument an das RFID-Lesegerät gesendet wird. Je nach Ausführungsform wird die Trägerwelle dabei nicht während des gesamten Sendeintervalls oder Empfangsintervalls gesendet, sondern mit Unterbrechungen oder variierender Feldstärke, beispielsweise gepulst.

Hierbei ist von ganz besonderem Vorteil, dass trotz der hohen Feldstärke der Trägerwelle ein sicherer Empfang des von dem RFID-Dokument abgesendeten RF-Signals mit Hilfe der Empfangsantenne des RFID-Lesegeräts möglich ist. Dies wird dadurch erreicht, dass das von dem RFID-Dokument abgesendete RF-Signal an der Sendeantenne gespiegelt wird, sodass die Empfangsantenne das gespiegelte RF-Signal empfängt. Da sich die Empfangsantenne in etwa in demselben Abstand wie das RFID-Dokument zu der Sendeantenne befindet, ist das gespiegelte RF-Signal an der Stelle, an der sich die Empfangsantenne befindet, besonders stark.

Ein guter Empfang des von dem RFID-Dokument abgesendeten RF-Signals durch die Empfangsantenne ist auch dann noch möglich, wenn der zweite Abstand, d.h. der Abstand des RFID-Dokuments von der Sendeantenne, wesentlich größer als der erste Abstand, d.h. der Abstand zwischen der Sendeantenne und der Empfangsantenne, ist, da auch in diesem Fall das Signal-Rauschleistungs-Verhältnis zwischen dem von der Empfangsantenne empfangenen gespiegelten Signal und der überlagerten Trägerwelle relativ groß ist.

Nach einer Ausführungsform der Erfindung beträgt die Feldstärke der Trägerwelle mehr als 10 A/m, insbesondere mehr als 15 A/m, insbesondere bis zu 20 A/m. Aufgrund der hohen Feldstärke lässt sich eine entsprechend große Leistung in das RFID-Dokument einkoppeln. Dies ist insbesondere dann besonders vorteilhaft, wenn das RFID-Dokument über keinen Energiespeicher oder einen Energiespeicher einer kleinen Kapazität verfügt, sodass zum Betrieb des RFID-Dokuments ständig Energie eingekoppelt werden muss. Insbesondere ist dies vorteilhaft für RFID-Dokumente ohne integrierte Primärbatterie. Ganz besonders vorteilhaft ist dies für Ausweisdokumente ohne Primärbatterie, bei denen die sonst für eine hohe Leistungsaufnahme des Dokuments erforderliche Primärbatterie häufig auszutauschen wäre oder die Lebensdauer des Ausweisdokuments stark einschränken würde.

Von ganz besonderem Vorteil sind Ausführungsformen der Erfindung ferner für RFID-Dokumente mit einer integrierten Anzeigevorrichtung, insbesondere einer emissiven Anzeigevorrichtung. Eine emissive Anzeigevorrichtung benötigt nämlich für deren Betrieb eine relativ hohe Leistung, die aufgrund der großen Feldstärke der von dem RF-Sender erzeugten Trägerwelle mit Hilfe der Dokumentenantenne in das Dokument eingekoppelt werden kann.

Nach einer Ausführungsform der Erfindung beträgt der erste Abstand zwischen der Sendeantenne und der Empfangsantenne zwischen 5 und 25 mm.

Nach einer Ausführungsform der Erfindung hat das RFID-Lesegerät eine Auflagefläche für das RFID-Dokument, die um den zweiten Abstand von der Sendeantenne beabstandet ist. Durch die Auflagefläche werden hier also die Mittel zur Positionierung des RFID-Dokuments gebildet. Die Auflagefläche kann eine Anlegekante oder eine andere Positionierungshilfe aufweisen, um das RFID-Dokument innerhalb der durch die Auflagefläche gebildeten Ebene relativ zu dem RFID-Lesegerät zu positionieren.

Nach einer Ausführungsform der Erfindung ist das RFID-Lesegerät zur Kommunikation mit dem RFID-Dokument nach einem Near Field Communication (NFC) Standard ausgebildet.

In einem weiteren Aspekt betrifft die Erfindung ein RFID-System, welches eine Ausführungsform eines erfindungsgemäßen Lesegeräts und zumindest ein RFID-Dokument beinhaltet. Das RFID-Dokument hat eine Dokumentenantenne mit Dokumentenantennenwicklungen, die in einer dritten Ebene liegen. Wenn sich das RFID-Dokument in der Position befindet, so können die Dokumentenantennenwicklungen konzentrisch zu den Sendeantennenwicklungen und/oder den Empfangsantennenwicklungen verlaufen. Ferner kann das RFID-Dokument so ausgebildet sein, dass die dritte Ebene, in der die Dokumentenantennenwicklungen liegen, parallel zu den ersten und zweiten Ebenen verläuft, wenn sich das RFID-Dokument in der Position befindet.

Hierbei ist von besonderem Vorteil, dass eine möglichst vollständige Symmetrie der Anordnung bestehend aus den Sende-, Empfangs- und Dokumentenantennen eine entsprechend annähernd perfekte Spiegelung eines von dem RFID-Dokument gesendeten RF-Signals an der Sendespule bewirkt, was einen entsprechend guten Empfang des RF-Signals durch die Empfangsantenne zur Folge hat. Insbesondere können die Sendeantenne, die Empfangsantenne und die Dokumentenantenne den gleichen Durchmesser aufweisen.

Die Anzahl der Wicklungen der Sende-, Empfangs- und Dokumentenantennen hängt von der jeweils benötigten Spannung ab. Beispielsweise kann die Sendeantenne 1 bis 8 Sendeantennenwindungen, insbesondere zwei Sendeantennenwindungen, aufweisen. Die Empfangsantenne kann beispielsweise 1 bis 5 Empfangsantennenwindungen, insbesondere eine Empfangsantennenwindung, aufweisen. Die Dokumentenantenne kann beispielsweise 2 bis 6 Dokumentenantennenwindungen, insbesondere 5 oder 6 Dokumentenantennenwindungen, aufweisen.

Im Weiteren werden Ausführungsformen der Erfindung mit Bezugnahme auf die Zeichnungen näher erläutert. Es zeigen:
- Figur 1: ein Blockdiagramm einer Ausführungsform eines erfindungsgemäßen RFID-Lesegeräts und eines erfindungsgemäßen RFID-Systems,
- Figur 2: die Ausführungsform der Figur 1, nachdem ein RFID-Dokument auf dem RFID-Lesegerät positioniert worden ist,
- Figur 3: eine schematische Darstellung des Feldes und der Spiegelung eines RF-Signals, welches von dem RFID-Dokument abgesendet wird.

Im Weiteren werden einander entsprechende Elemente jeweils mit denselben Bezugszeichen gekennzeichnet.

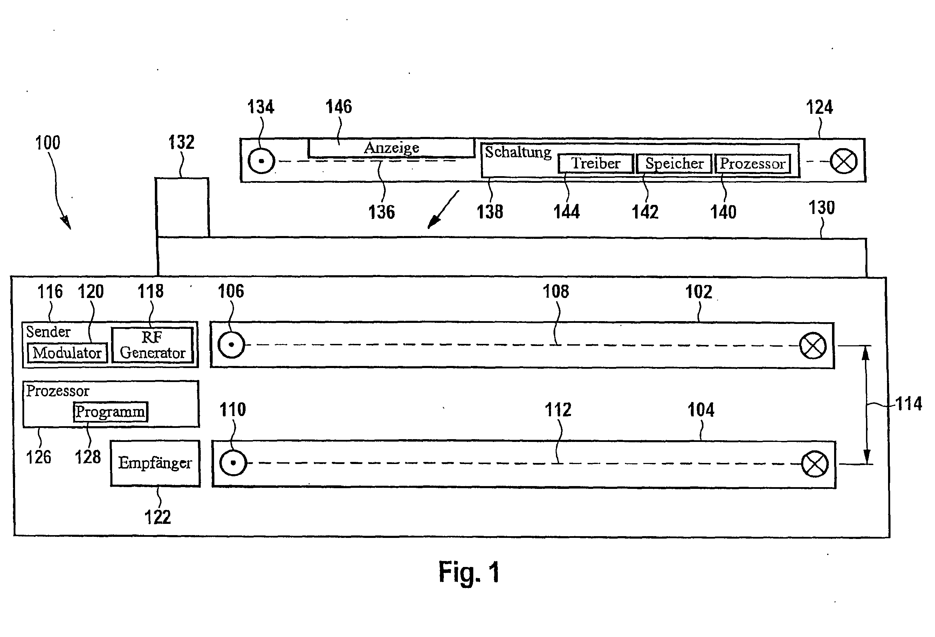

Die Figur 1 zeigt ein RFID-Lesegerät 100 mit einer Sendeantenne 102 und einer Empfangsantenne 104.

Die Sendeantenne 102 hat zumindest eine Sendeantennenwicklung 106, die in einer ersten Ebene 108 verläuft. Entsprechend verhält es sich für die Empfangsantenne 104, die zumindest eine Empfangsantennenwicklung 110 aufweist, die in einer zweiten Ebene 112 verläuft. Die Ebenen 108 und 112 können parallel zueinander sein. Die Sendeantenne 102 und die Empfangsantenne 104 haben einen ersten Abstand 114 zueinander.

Das RFID-Lesegerät 100 hat ferner einen RF-Sender 116 mit einem RF-Generator 118, der dazu ausgebildet ist, eine Trägerwelle zu generieren, die von der Sendeantenne 102 abgestrahlt wird. Ferner hat der RF-Sender 116 einen Modulator 120, der dazu dient, der Trägerwelle ein RF-Signal aufzumodulieren.

Das RFID-Lesegerät 100 hat ferner einen Empfänger 122, der mit der Empfangsantenne 104 verbunden ist, um ein von einem RFID-Dokument 124 gesendetes RF-Signal zu empfangen.

Das RFID-Lesegerät 100 hat ferner einen Prozessor 126 zur Ausführung von Programminstruktionen 128, durch die der Sender 116 und/oder der Empfänger 122 gesteuert werden.

Das RFID-Lesegerät 100 hat Mittel zur Positionierung des RFID-Dokuments 124 relativ zu der Sendeantenne 102 und der Empfangsantenne 104. Diese Mittel zur Positionierung werden hier durch eine Auflagefläche 130 gebildet, die auf der Oberseite des RFID-Lesegeräts 100 angeordnet ist. Die Auflagefläche 130 hat einen in vertikaler Richtung vorstehenden Vorsprung 132, durch den eine Anlegekante zur Positionierung des RFID-Dokuments 124 auf der Auflagefläche 130 gebildet wird.

Das RFID-Dokument 124 hat eine Dokumentenantenne mit zumindest einer Dokumentenantennenwicklung 134, die in einer dritten Ebene 136 verläuft. Die Dokumentenantenne dient sowohl zum Empfang von RF-Signalen als auch zum Senden von RF-Signalen und zusätzlich zur Einkopplung von Energie in das RFID-Dokument 124.

Das RFID-Dokument 124 hat eine Schaltung 138, wie zum Beispiel einen sogenannten RFID-Chip, wobei die Schaltung 138 in einem Dokumentenkörper des RFID-Dokuments 124 integriert sein kann. Die Schaltung 138 hat einen Prozessor 140 zur Ausführung von Programminstruktionen sowie einen elektronischen Speicher 142 und einen Treiber 144 für eine Anzeigevorrichtung 146, die ebenfalls in dem Dokumentenkörper integriert sein kann.

In dem elektronischen Speicher 142 können ein oder mehrere Bilder gespeichert sein. Wenn in das RFID-Dokument 124 über die Dokumentenantenne Energie eingekoppelt wird, so wird die Ausführung der Programminstruktionen durch den Prozessor 140 gestartet, sodass auf den Speicher 142 zugegriffen wird, um den Treiber 144 zur Anzeige der Bilder auf der Anzeigevorrichtung 146 anzusteuern. Beispielsweise kann das RFID-Dokument 124 als elektronischer Personalausweis ausgebildet sein, wobei dann auf der Anzeigevorrichtung 146 ein oder mehrere Passbilder ausgegeben werden. Die Anzeigevorrichtung 146 kann insbesondere als emissives Display, insbesondere als OLED-Display, ausgebildet sein.

In dem Speicher 142 können weitere Daten gespeichert sein, wie zum Beispiel Angaben zu dem Träger des RFID-Dokuments 124, insbesondere Name, Wohnort, Geburtsdatum, etc. und/oder biometrische Daten, wie zum Beispiel Fingerabdruckoder Irisscan-Daten. Diese Daten können von dem RFID-Lesegeräts 100 aus dem Speicher 142 mittels RF-Kommunikation ausgelesen werden. Hierzu kann eine einseitige oder gegenseitige Authentifizierung des RFID-Lesegeräts 100 und des RFID-Dokuments 124 erforderlich sein, insbesondere nach einem Basic Access Control Protokoll und/oder einem Extended Access Control Protokoll.

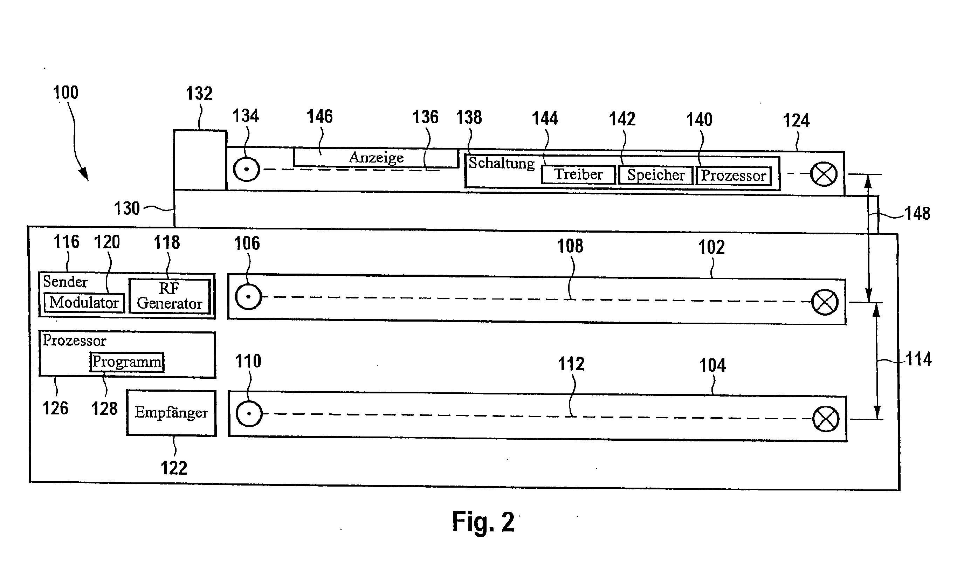

Die Figur 2 zeigt das RFID-Lesegerät 100, nachdem das RFID-Dokument 124 in seine Position gebracht worden ist, in der der Austausch von RF-Signalen zwischen dem RFID-Lesegerät 100 und dem RFID-Dokument 124 stattfinden soll. In dieser Position hat die Dokumentenantenne von der Sendeantenne einen zweiten Abstand 148, der mindestens das 0,7-fache des Abstands 114 beträgt. Beispielsweise ist der Abstand 148 ungefähr gleich dem Abstand 114 oder der Abstand 148 ist größer als der Abstand 114.

Die Ebene 136 ist in dieser Position vorzugsweise parallel zu den Ebenen 108 und 112. Die Sendeantennenwicklung 106, die Empfangsantennenwicklung 110 und die Dokumentenantennenwicklung 134 sind vorzugsweise konzentrisch zueinander; die Sendeantenne 102, die Empfangsantenne 104 und die Dokumentenantenne haben ferner vorzugsweise dieselben Durchmesser.

Für eine RF-Kommunikation zwischen dem RFID-Lesegerät 100 und dem RFID-Dokument 124 wird durch Ausführung der Programminstruktionen 128 der Sender von dem Prozessor 126 angesteuert, um eine Trägerwelle mit Hilfe der Sendeantenne 102 abzustrahlen. Mit Hilfe der Dokumentenantennenwicklung 134 wird aus der Trägerwelle Energie in das RFID-Dokument 124 eingekoppelt, sodass die Ausführung der Programminstruktionen durch den Prozessor 140 beginnt und die Bilder auf der Anzeige 146 wiedergegeben werden.

In einem Sendeintervall wird der Modulator 120 von dem Prozessor 126 angesteuert, um der Trägerwelle ein RF-Signal aufzumodulieren, welches mit Hilfe der Sendeantenne 102 abgestrahlt und mit Hilfe der Dokumentenantenne empfangen werden kann. Der Informationsgehalt des RF-Signals wird durch Ausführung der Programminstruktionen von dem Prozessor 140 verarbeitet und es wird daraufhin ein Antwort-RF-Signal von dem Prozessor 140 generiert. Das Antwort-RF-Signal wird dann in einem dem Sendeintervall nachfolgenden Empfangsintervall von dem RFID-Dokument 124 abgesendet, sodass das Antwort-RF-Signal mit Hilfe der Empfangsantenne 104 empfangen werden kann. Das Antwort-RF-Signal wird von dem Empfänger 122 demoduliert und die empfangenen Daten in den Prozessor 126 für weitere Verarbeitungsschritte eingegeben.

Die Abstrahlung der Trägerwelle durch das RFID-Lesegerät 100 kann dabei auch während des Empfangsintervalls erfolgen, sodass das Antwort-RF-Signal der Trägerwelle überlagert wird. Aufgrund der Symmetrie der Anordnung ist dennoch ein sicherer Empfang des Antwort-RF-Signals mit Hilfe der Empfangsantenne 104 möglich.

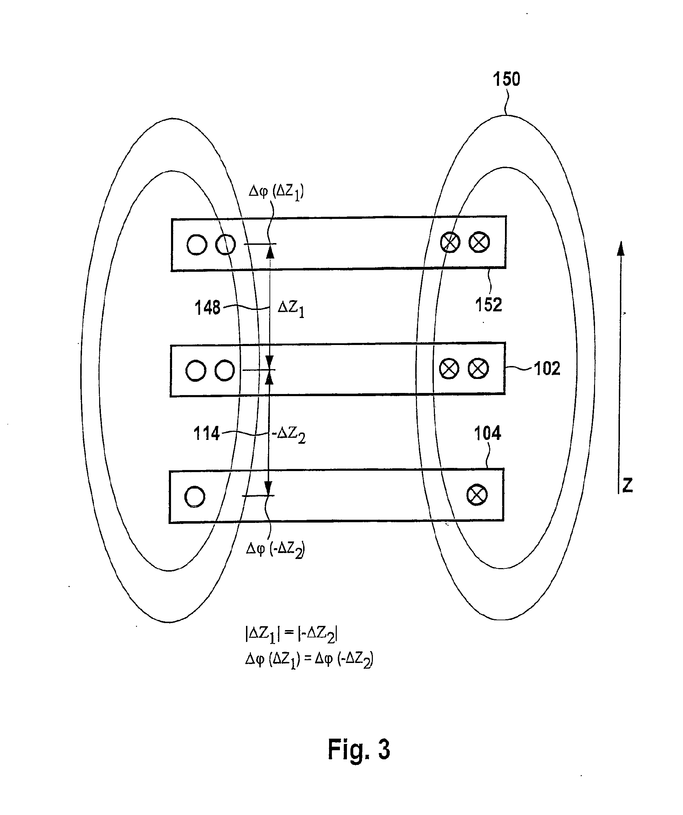

Die Figur 3 zeigt schematisch das Feld der Trägerwelle 150, welches die Sendeantenne 102 abstrahlt. Eine in dem zweiten Abstand 148, d.h. Δz₁, von der Dokumentenantenne 152 erzeugte Feldmodifikation des Betrags Δϕ wird von den Sendeantennenwicklungen 106 gespiegelt, sodass sich in dem Abstand 114, d.h. -Δz₂, eine entsprechende Feldänderung Δψ ergibt. Wenn die Beträge von Δz₁ und Δz₂ gleich sind, ist im Idealfall Δϕ genau gleich Δψ.

Wenn also durch ein Antwort-RF-Signal eine Feldänderung Δϕ von der Dokumentenantenne 152 bewirkt wird, so hat dies bei einer perfekt symmetrischen Anordnung eine gleiche Feldänderung Δϕ an der Position der Empfangsantenne 104 zur Folge, sodass das gespiegelte Antwort-RF-Signal von der Empfangsantenne 104 entsprechend leicht empfangen werden kann, auch wenn gleichzeitig die Trägerwelle 150 mit einer relativ großen Feldstärke von der Sendeantenne 102 abgestrahlt wird.

### Bezugszeichenliste

- 100: RFID-Lesegerät
- 102: Sendeantenne
- 104: Empfangsantenne
- 106: Sendeantennenwicklung
- 108: Ebene
- 110: Empfangsantennenwicklung
- 112: Ebene
- 114: Abstand
- 116: RF-Sender
- 118: RF-Generator
- 120: Modulator
- 122: Empfänger
- 124: RFID-Dokument
- 126: Prozessor
- 128: Programminstruktionen
- 130: Auflagefläche
- 132: Vorsprung
- 134: Dokumentenantennenwicklung
- 136: Ebene
- 138: Schaltung
- 140: Prozessor
- 142: elektronischer Speicher
- 144: Treiber
- 146: Anzeigevorrichtung
- 148: Abstand
- 150: Trägerwelle
- 152: Dokumentenantenne

## Patentansprüche

1. RFID-System, aufweisend ein RFID-Lesegerät (100) mit einer Sendeantenne (102) und einer Empfangsantenne (104), wobei
- die Sendeantenne (102) von der Empfangsantenne (104) um einen ersten Abstand (114) beabstandet ist,
- die Sendeantenne (102) Sendeantennenwicklungen (106) aufweist, die in einer ersten Ebene (108) liegen,
- die Empfangsantenne (104) Empfangsantennenwicklungen (110) aufweist, die in einer zweiten Ebene (112) liegen,
- die erste und zweite Ebene parallel zueinander sind,
und ein RFID-Dokument (124) mit einer Dokumentenantenne (152) und einer Anzahl weiterer Einrichtungen, wobei
- die Dokumentenantenne (152) zumindest eine Dokumentenantennenwicklung (134) hat, die in einer dritten Ebene (136) liegt,
- die Dokumentenantenne (152) zur Energieversorgung der weiteren Einrichtungen ausgebildet ist, und
**dadurch gekennzeichnet, dass** das RFID-Lesegerät (100) Mittel (130, 132) aufweist zur Positionierung des RFID-Dokuments (124) an einer Position, die von der Sendeantenne (102) um einen zweiten Abstand (148) beabstandet ist, sodass
- die dritte Ebene (136) zur ersten Ebene (108) parallel und um den zweiten Abstand (148) versetzt verläuft,
- die erste Ebene (108) zwischen der zweiten Ebene (112) und der dritten Ebene (136) liegt und
- der zweite Abstand (148) mindestens das 0,8-fache und höchstens das 2-fache des ersten Abstands beträgt,
wobei die Mittel (130,132) eine Auflagefläche (130) für das RFID-Dokument (124) umfassen, die durch zumindest eine Anlegekante (132) begrenzt ist.

2. RFID-System nach Anspruch 1, **dadurch gekennzeichnet, dass** der zweite Abstand mindestens das 0,8 -fache des ersten Abstands beträgt.

3. RFID-System nach Anspruch 1, **dadurch gekennzeichnet, dass** der zweite Abstand höchstens das 2-fache des ersten Abstands beträgt.

4. RFID-System nach Anspruch 1, wobei die ersten und die zweiten Abstände gleich sind.

5. RFID-System nach einem der vorhergehenden Ansprüche, das RFID-Lesegerät ferner umfassend einen RF-Sender (116), der zur Erzeugung eines Feldes einer Feldstärke von mehr als 7,5 A/m an der Position ausgebildet ist, einen RF-Empfänger (122), und Steuerungsmittel (126, 128), die so ausgebildet sind, dass der RF-Sender in einem Empfangsintervall zur Erzeugung des Feldes mit einer Feldstärke von mehr als 7,5 A/m angesteuert wird, sodass sich ein von dem RFID-Dokument gesendetes RF-Signal dem Feld überlagert.

6. RFID- System nach Anspruch 5, wobei die Feldstärke > 10 A/m, insbesondere 15 A/m, insbesondere bis maximal 20 A/m beträgt.

7. RFID- System nach einem der vorhergehenden Ansprüche, wobei der erste Abstand zwischen 5 und 25 mm beträgt.

8. RFID- System nach einem der vorhergehenden Ansprüche, wobei die Mittel zur Positionierung eine Auflagefläche (130) für das Dokument aufweisen.

9. RFID- System nach Anspruch 8, wobei die Auflagefläche durch zumindest eine Anlegekante (132) begrenzt ist.

10. RFID- System nach einem der Ansprüche 5 bis 9, wobei der RF-Sender zum Senden mit einer Trägerfrequenz von 13,56 MHz ausgebildet ist.

11. RFID- System nach einem der vorhergehenden Ansprüche, wobei das RFID-Lesegerät zur Kommunikation mit dem RFID-Dokument mittels Near Field Communication (NFC) ausgebildet ist.

12. RFID-System nach einem der vorhergehenden Ansprüche, wobei die Sendeantenne, die Empfangsantenne und/oder die Dokumentenantenne gleiche Durchmesser aufweisen.

## Claims

1. An RFID system, comprising an RFID reader (100) having a transmitting antenna (102) and a receiving antenna (104), wherein
- the transmitting antenna (102) is distanced from the receiving antenna (104) by a first distance (114),
- the transmitting antenna (102) has transmitting antenna windings (106), which lie in a first plane (108),
- the receiving antenna (104) has receiving antenna windings (110), which lie in a second plane (112),
- the first and second plane are parallel to one another,
and an RFID document (124) having a document antenna (152) and a number of further devices, wherein
- the document antenna (152) has at least one document antenna winding (134), which lies in a third plane (136),
- the document antenna (152) is configured to supply energy to the further devices, and
**characterised in that** the RFID reader (100) has means (130, 132) for positioning the RFID document (124) in a position that is distanced from the transmitting antenna (102) by a second distance (148), such that
- the third plane (136) runs parallel to the first plane (108), offset by the second distance (148),
- the first plane (108) lies between the second plane (112) and the third plane (136), and
- the second distance (148) is at least 0.8 times and at most twice the first distance,
wherein the means (130, 132) comprise a support surface (130) for the RFID document (124), which support surface is delimited by at least one guide edge (132).

2. The RFID- system according to Claim 1, **characterised in that** the second distance is at least 0.8 times the first distance.

3. The RFID system according to Claim 1, **characterised in that** the second distance is at most twice the first distance.

4. The RFID system according to Claim 1, wherein the first and the second distances are the same.

5. The RFID system according to one of the preceding claims, the RFID reader also comprising an RF transmitter (116), which is configured to generate a field having a field strength of more than 7.5 A/m at the position, an RF receiver (122), and control means (126, 128), which are configured such that the RF transmitter is actuated in a receiving interval to generate the field with a field strength of more than 7.5 A/m, such that an RF signal sent by the RFID document superimposes the field.

6. The RFID system according to Claim 5, wherein the field strength is >10 A/m, in particular 15 A/m, in particular up to 20 A/m at most.

7. The RFID system according to one of the preceding claims, wherein the first distance is between 5 and 25 mm.

8. The RFID system according to one of the preceding claims, wherein the positioning means have a support surface (130) for the document.

9. The RFID system according to Claim 8, wherein the support surface is delimited by at least one guide edge (132).

10. The RFID system according to one of Claims 5 to 9, wherein the RF transmitter is configured to transmit with a carrier frequency of 13.56 MHz.

11. The RFID system according to one of the preceding claims, wherein the RFID reader is configured to communicate with the RFID document by means of near field communication (NFC).

12. The RFID system according to one of the preceding claims, wherein the transmitting antenna, the receiving antenna and/or the document antenna have the same diameter.

## Revendications

1. Système RFID présentant un appareil de lecture RFID (100) avec une antenne émettrice (102) et une antenne réceptrice (104), dans lequel
- l'antenne émettrice (102) est séparée de l'antenne réceptrice (104) avec une première distance (114),
- l'antenne émettrice (102) présente des bobinages d'antenne émettrice (106) qui se situent dans un premier plan (108),
- l'antenne réceptrice (104) présente des bobinages d'antenne réceptrice (110) qui se situent dans un deuxième plan (112),
- les premier et deux plans sont parallèles l'un à l'autre,
et un document RFID (124) avec une antenne de document (152) et un certain nombre d'autres installations, dans lequel
- l'antenne de document (152) possède au moins un bobinage d'antenne de document (134), qui se situe dans un troisième plan (136),
- l'antenne de document (152) est conçue pour l'alimentation en énergie des autres installations, et
**caractérisé en ce que** l'appareil de lecture RFID (100) présente des moyens (130, 132) pour le positionnement du document RFID (124) dans une position qui est séparée de l'antenne émettrice (102) avec une deuxième distance (148), de sorte que
- le troisième plan (136) est parallèle au premier plan (108) et s'étend décalé d'une valeur correspondant à la deuxième distance (148),
- le premier plan (108) se situe entre le deuxième plan (112) et le troisième plan (136) et
- la deuxième distance (146) correspond à au moins 0,8 fois et au plus à 2 fois l'équivalent de la première distance,
dans lequel les moyens (130, 132) comprennent une surface de support (130) pour le document RFID (124) qui est délimitée par au moins une arête d'appui (132).

2. Système RFID selon la revendication 1, **caractérisé en ce que** la deuxième distance correspond à l'équivalent d'au moins 0,8 fois la première distance.

3. Système RFID selon la revendication 1, **caractérisé en ce que** la deuxième distance correspond à l'équivalent d'au plus 2 fois la première distance.

4. Système RFID selon la revendication 1, dans lequel les première et deuxième distances sont identiques.

5. Système RFID selon l'une des revendications précédentes, l'appareil de lecture RFID comprenant en outre un émetteur RFID (116) qui est conçu pour la génération d'un champ d'une valeur de champ de plus de 7,5 A/m à la position, un récepteur RFID (122) et des moyens de commande (126, 128) qui sont conçus de telle manière que l'émetteur RFID est démarré avec un intervalle de signal de réception pour la génération d'un champ avec une valeur de champ de plus de 7,5 A/m, de sorte qu'un signal RF émis par le document RFID se superpose au champ.

6. Système RFID selon la revendication 5, dans lequel la valeur du champ se situe > 10 A/m, notamment à 15 A/m, en particulier, jusqu'à 20 A/m au maximum.

7. Système RFID selon l'une des revendications précédentes, dans lequel la première distance se situe entre 5 et 25 mm.

8. Système RFID selon l'une des revendications précédentes, dans lequel les moyens présentent une surface de support (130) pour le positionnement destinée au document.

9. Système RFID selon la revendication 8, dans lequel la surface de support est délimitée par au moins une arête d'appui (132).

10. Système RFID selon l'une des revendications 5 à 9, dans lequel l'émetteur RF est conçu pour émettre avec une fréquence porteuse de 13,56 MHz.

11. Système RFID selon l'une des revendications précédentes, dans lequel l'appareil de lecture RFID est conçu pour la communication avec le document RFID au moyen d'une communication en champ proche (Near Field Communication, NFC).

12. Système RFID selon l'une des revendications précédentes, dans lequel l'antenne émettrice, l'antenne réceptrice et/ou l'antenne de document présentent des diamètres identiques.
